# EUROPÄISCHE PATENTSCHRIFT

(11) **EP 3 415 054 B1**
(45) Veröffentlichungstag und Bekanntmachung des Hinweises auf die Patenterteilung: **24.08.2022**
(21) Anmeldenummer: 18174975.5
(22) Anmeldetag: 30.05.2018
(51) Int. Cl.: A47J 31/52

(54) **PROGRAMMGESTEUERTER HEISSGETRÄNKEBEREITER MIT EINER BEDIENVORRICHTUNG**
PROGRAMME-CONTROLLED HOT BEVERAGE MAKER COMPRISING AN OPERATOR CONTROL
PRÉPARATEUR DE BOISSON CHAUDE À COMMANDE PROGRAMMÉE DOTÉ D'UN DISPOSITIF DE COMMANDE

(30) Priorität: 13.06.2017 DE 102017112922
(43) Veröffentlichungstag der Anmeldung: 19.12.2018
(73) Patentinhaber: Miele & Cie. KG, 33332 Gütersloh (DE)
(72) Erfinder: Tembaak, Jutta, 49492 Westerkappeln (DE)

(56) Entgegenhaltungen:
- EP-A1- 2 661 996
- DE-A1-102006 043 906

## Beschreibung

Programmgesteuerter Heißgetränkebereiter mit einer Bedienvorrichtung Die Erfindung betrifft einen programmgesteuerten Heißgetränkebereiter mit Aktoren zur Zubereitung von heißen Getränken, zumindest einem Vorratsbehälter zur Bevorratung einer Zutat, einer Steuereinrichtung (18) zum Aktivieren und Deaktivieren der Aktoren für die Zubereitung des Getränks und einer Bedienvorrichtung mit einer Anzeigevorrichtung zur Anzeige oder Kennzeichnung von verschiedenen, auswählbaren Getränken oder Parametern, die mit der Steuereinrichtung in Verbindung steht und einer Bedienhandhabe zur Auswahl eines auszuwählenden Getränks, die ebenfalls mit der Steuereinrichtung in Verbindung steht zur Aktivierung und Durchführung der Zubereitung des ausgewählten Getränks, wobei die die Steuereinrichtung dazu eingerichtet und programmiert ist, eine Information über den Füllstand zumindest einer Zutat in dem der Zutat zugeordneten Vorratsbehälter auf der Anzeigevorrichtung auszugeben.

Aus der DE 10 2006 043 906 A1 ist eine Heißgetränkebereiter mit einem Wasserbehälter, einem Sensor zur Erfassung des Füllstands des Wasserbehälters und einer Anzeigeeinrichtung zur Anzeige eines vom Sensor erfassten Füllstands bekannt. Hierbei wird der Füllstand in der Anzeige als aus dem vorhandenen Wasser zu beziehende verbleibende Tassenzahl angegeben. Ein weiterer gattungsgemäßer Heißgetränkebereiter ist aus der Druckschrift EP 2 661 996 bekannt.

Der Benutzer muss hierbei die Füllmengen beachten, bevor er sein Getränk auswählt. Ferner kann es vorkommen, dass bei einer Leeranzeige eine Getränkeausgabe verweigert oder als unmöglich angezeigt wird, obwohl es zubereitet werden kann, wenn die aufgebrauchte Zutat nicht benötigt oder der noch verbleibende Rest für das Getränk ausreicht. Ein Nachteil des bekannten Heißgetränkebereiters ist, dass Sensoren verwendet werden, die sich jeweils im Bereich der bevorrateten Zutat befinden. Diese Anordnungen erfordern einen konstruktiven Aufwand, wobei auch Fehlerfassungen aufgrund von Verschmutzung oder Feuchtigkeit möglich sind.

Der Erfindung liegt somit die Aufgabe zu Grunde, einen Heißgetränkebereiter mit einer Informationsausgabe hinsichtlich der bevorrateten Zutaten bereitzustellen, wobei die Information über die aktuelle Zutatenmenge einfach und zuverlässig ermittelt oder bereitgestellt wird.

Erfindungsgemäß wird unter anderem diese Aufgabe durch einen Heißgetränkebereiter mit den Merkmalen des unabhängigen Anspruchs 1 und durch ein Verfahren gemäß Anspruch 9 gelöst. Vorteilhafte Ausgestaltungen und Weiterbildungen der Erfindung ergeben sich aus den jeweils abhängigen Ansprüchen.

Ein mit der Erfindung erreichbarer Vorteil besteht darin, dass dem Benutzer eine zuverlässige Information über den Füllstand einer in einem Vorratsbehälter vorhandenen Zutat erhält. Somit kann er sicherstellen, dass für das gewünschte Getränk auch jeweils ausreichende Mengen der benötigten Zutaten vorhanden ist. Das bedeutet, dass Fehlfunktionen weitgehend vermieden werden, beispielsweise wenn ein Getränk zubereitet wird mit einer fehlenden Zutat oder mit zu geringer Menge einer Zutat, wenn diese während des Zubereitungsvorgangs zu Neige geht. Insgesamt wird der Benutzungskomfort verbessert, weil der Benutzer sich vor der Auswahl eines Getränks deutlich eine zuverlässige Information erhält, ob alle Zutaten in ausreichender Menge im und/oder am Gerät bevorratet sind.

Hierzu ist die Steuereinrichtung dazu eingerichtet und programmiert, eine im Vorratsbehälter vorhandenen Zutatenmenge anhand der vom Benutzer ausgewählten Getränke zu ermitteln. Das bedeutet, ein im Speicher der Steuereinrichtung abgespeichertes Maß oder ein Kennwert für die aktuell im Vorratsbehälter angenommene Zutatenmenge wird bei der Auswahl oder beim Start der Getränkezubereitung um den Wert vermindert, der für die aktuelle Getränkezubereitung benötigt wird. Damit wird stets der jeweils aktuelle Wert der im jeweiligen Behälter befindlichen Zutatenmenge im Speicher hinterlegt. Hierbei handelt es sich um einen ermittelten oder berechneten Wert, der dem realen Wert der im Behälter befindlichen Zutatenmenge recht nahekommt, weil die jeweiligen, verschiedenen Einzelmengen, die für die unterschiedlichen Getränkezubereitungen benötigt werden, der Steuerung bzw. dem Mikrocontroller bekannt sind. Diese Art der Ermittlung der aktuellen Menge der jeweils in den Behältern befindlichen Zutaten ist sogar zuverlässiger und führt zu genaueren Ergebnissen, als dies mit handelsüblichen Sensoren, wie Gewichtssensor oder Lichtschranke, möglich ist. Beim Einsatz von Sensoren sind zu viele Störfaktoren, wie Verschmutzung, Feuchtigkeit oder Temperaturschwankungen, vorhanden, die die Erfassung der im Behälter vorhandenen Menge verfälschen. Bei der rechnerischen Ermittlung, wie sie für den erfindungsgemäßen Heßgetränkebereiter definiert ist, haben die Störfaktoren keinen Einfluss. Insgesamt ist diese Art der Ermittlung auf einfache Weise möglich, da sowohl die Zutatenmenge in den einzelnen Vorratsbehältern aktuell ermittelt oder berechnet wird und ferner im Speicher der Steuereinrichtung die Rezepte und/oder die jeweils benötigten Teilmengen für die einzelnen, verschiedenen Getränke abgespeichert sind.

In bevorzugter Weiterbildung ist die Steuereinrichtung dazu eingerichtet und programmiert, bei Unterschreiten einer für ein spezifisches Getränk notwendigen Zutatenmenge eine Warnmeldung, akustisch mittels eines Klangerzeugungsmittels und/oder optisch mittels der Anzeigevorrichtung auszugeben. Damit wird der Benutzer in deutlicher Art und Weise erst dann auf ein Ereignis aufmerksam gemacht, wenn eine Wartungshandlung, hier das Nachfüllen einer Zutat in den dazugehörigen Vorratsbehälter, erforderlich ist.

Erfindungsgemäß ist die Steuereinrichtung dazu eingerichtet und programmiert, die Information der Zutatenmenge unter Zuhilfenahme einer Berechnungsformel oder eines mathematischen Modells nach jeweils einer Getränkeauswahl zu aktualisieren. Eine Berechnungsformel oder ein mathematisches Modell lässt sich sehr einfach als Computerprogramm oder Programmteil im Speicher abspeichern. Ferner können eine Vielzahl von Anpassungen hinsichtlich der zu berücksichtigenden Einzelmengen als Formel oder Zuordnungstabelle hinterlegt sein, weil für die verschiedenen auswählbaren Getränke jeweils unterschiedliche Mengen an Zutaten verbraucht werden.

In einer weiteren, insgesamt bevorzugten Ausführung ist die Steuereinrichtung dazu eingerichtet und programmiert, die Information der Zutatenmenge nur anhand der vom Benutzer jeweils getätigten Getränkeauswahl und ohne Zuhilfenahme von Füllstandsensoren zu berechnen und zu aktualisieren. Dadurch wird der Aufbau des Heißgetränkebereiters einfach, kostengünstig und zuverlässig gestaltet.

Die Ermittlung des Füllstandes mittels des Mikrocontrollers in der Steuereinrichtung ist dieser dazu eingerichtet und programmiert ist, die Information der Zutatenmenge zu ermitteln:
ausgehend von einem Initialwert, der dem vollständig gefüllten Behälter repräsentiert, die der Teilmengen, die jeweils den Verbrauch der Zutat für jeweils einen aktivierten Getränkebezug repräsentieren, zu subtrahieren. Die Berechnung mittels Kennzahlen, die jeweils ein Volumen oder ein Gewicht repräsentieren, ist sehr einfach durchzuführen. Die Angabe der tatsächlichen Menge, die der jeweiligen Kennzahl oder Maßzahl entspricht, kann nach der Berechnung umgerechnet werden, sodass für die im Behälter befindliche Restmenge ein Volumen wert oder Gewichtswert mit einer Einheit ausgegeben wird. Eine andere Möglichkeit der Befüllungsanzeige ist, den befüllten Anteil anzuzeigen, also 1/1, ½, oder ¼ gefüllt, ähnlich einer Tankanzeige im Automobil.

In einer weiteren, insgesamt zweckmäßigen Ausführung ist zumindest ein Vorratsbehälter für Kaffeebohnen vorgesehen. wobei die Steuereinrichtung dazu eingerichtet und programmiert ist, beim Unterschreiten der für ein Kaffeegetränk notwendigen Mindestmenge bei der Auswahl von Getränken mit Kaffeeanteil eine Warnmeldung zum Aufzeigen des Mangels an Kaffeebohnen auf dem Display auszugeben. Entsprechendes wird in einer bevorzugten Weiterbildung für die Vorratsbehälter für Wasser und/oder für Milch verwendet.

Zusätzlich zum Vorhandensein der Zutatenmengen wird in einer zweckmäßigen Ausführung der Erfindung der Füllzustand des Abfallbehälters überwacht. Hierbei wird überwacht, ob anhand des erfassten Füllzustandes noch genügend Platz zur Aufnahme von Abfall, wie Kaffeesatzkuchen, vorhanden ist. Beispielsweise werden, wenn nur noch Platz für einen einzigen Kaffeesatzkuchen vorhanden ist, Kaffeezubereitungen mit einer Abfallmenge von mehr als einem Kaffeesatzkuchen aus der Auswahl herausgenommen.

Die Erfindung betrifft ferner ein Verfahren zum Betreiben eines programmgesteuerten Heißgetränkebereiters mit Aktoren zur Zubereitung von heißen Getränken, zumindest einem Vorratsbehälter zur Bevorratung einer Zutat, einer Steuereinrichtung zum Aktivieren und deaktivieren der Aktoren für die Zubereitung des Getränks und einer Bedienvorrichtung mit einer Anzeigevorrichtung zur Anzeige oder Kennzeichnung von verschiedenen, auswählbaren Getränken oder Parametern, die mit der Steuereinrichtung in Verbindung steht zur Auswahl und Beeinflussung des Ablaufs für die Zubereitung des ausgewählten Getränks. Das Verfahren ist gekennzeichnet durch folgende Schritte:
- Ermitteln zumindest einer Zutatenmenge in zumindest einem Vorratsbehälter;
- Vergleichen der Zutatenmenge mit einem Wert für eine Mindestmenge für ein mit dieser Zutat zu bereitendes Getränk;
- Ausgeben einer optischen Warnmeldung auf dem Display und/oder einer akustischen Ausgabe, wenn der erfasste Wert der Zutatenmenge eine Mindestmenge unterschreitet.

Gemäß einer zweckmäßigen Ausführung des Heißgetränkebereiters gemäß einer der vorbenannten Ausführung sind die Steuereinrichtung und die Bedienvorrichtung dazu eingerichtet und programmiert, das Verfahren gemäß vorstehender Definition durchzuführen.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer skizzierten, perspektivischen Ansicht;
- Fig. 2:: die Bedienvorrichtung für den Heißgetränkebereiter schematisch und
- Fig. 3:: die Funktionsweise der Ermittlung eines Behälterfüllstandes und
- Fig. 4:: Die Anzeigevorrichtung in der Situation zur Ausgabe einer Warnmeldung.

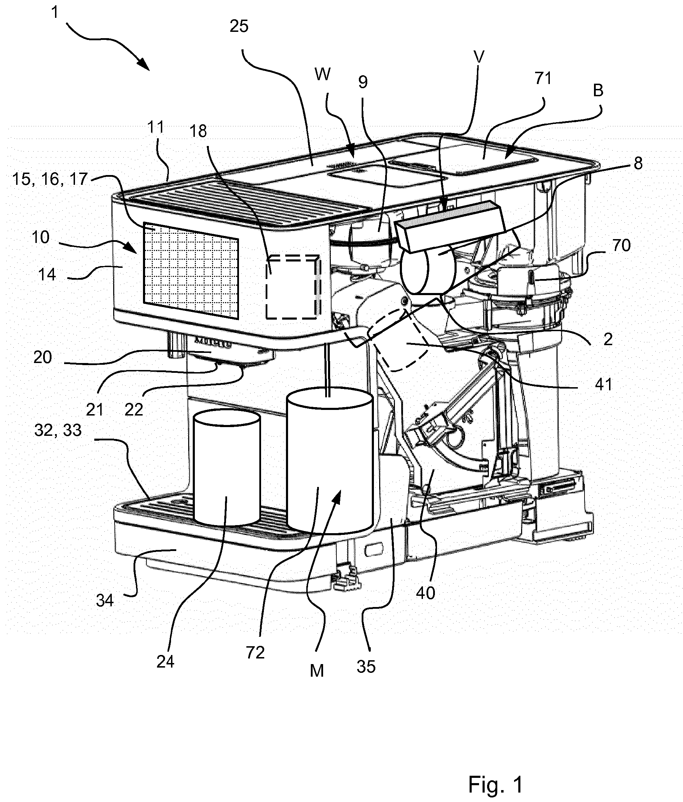

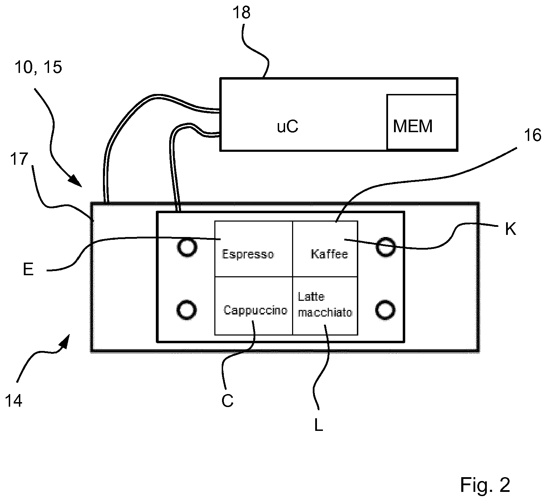

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen B mit darunter angebrachtem Mahlwerk 70 mit Motor, den Wasserbehälter 25 sowie die Möglichkeit, der Unterbringung des Strömungsleitungssystems 2 Ferner ist am Gerät 1 ein Vorratsbehälter 72 für Milch M angeschlossen bzw. mit dem Strömungsleitungssystem 2 fluidtechnisch gekoppelt. Im Frontbereich des Heißgetränkebereiter 1 verfügt dieser über einen höhenbeweglichen Auslass 20, in dem mehrere Entnahmeeinrichtungen, hier Auslassdüsen 21, 22, untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche 33 abgestellten Trinkgefäßes 24 angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einer unterhalb des Abtropfbleches 32 vorhandenen Auffangschale 34 abzuführen. Ferner umfasst der Heißgetränkebereiter 1 einen Tresterbehälter oder Abfallbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpe 8, Ventile der Ventilanordnung V, Heizeinrichtung 9 und Mahlwerk 70, soweit vorhanden, zu steuern, wie es für die Zubereitung des jeweils ausgewählten Getränkes notwendig ist. Die Steuereinrichtung 18 ist bevorzugt als Mikrocontroller uC mit einem zugeordneten Speicher MEM ausgeführt ist (Fig. 2), Der Heißgetränkebereiter 1 umfasst ferner eine Bedienvorrichtung 10, die eine als Display 16 ausgebildete Anzeigevorrichtung und eine Bedienhandhabe 15, E, K, C, L zur Eingabe von Bedienhandlungen umfasst. Die Bedienvorrichtung 10 wird von einem Mikrocontroller uC gesteuert, wobei in dem gezeigten Beispiel die Gerätesteuerung 18 bzw. der Mikrocontroller uC der Gerätesteuerung 18 auch für die Steuerung und Funktion der Bedienvorrichtung 10 mit den dazugehörigen Komponenten Display 16 und Sensorfeld 17 (Fig. 2) ausgebildet und/oder programmiert ist. Die Vorratsbehälter sind jeweils mit einem Erfassungsmittel zur Erfassung der bevorrateten Menge der Zutat oder Zutaten versehen, die datentechnisch oder signaltechnisch mit der Steuereinrichtung 18 in Verbindung stehen. Auch dieser Füllzustand des Abfallbehälters 35, 34 kann auch sensorlos anhand der Bezüge berechnet werden, sodass bei einem berechneten Grenzwert die Steuereinrichtung 18 eine Warnmeldung zur Ausgabe an das Display 15 veranlasst.

Unter Berücksichtigung dieser Informationen erfolgt die Bereitstellung der auszuwählenden und zu aktivierenden Getränkezubereitungen in oder auf der Bedienvorrichtung 10 wie unten ausführlich beschrieben.

In Fig. 2 ist die Bedienvorrichtung 10 als Detail skizziert. Die Bedienvorrichtung 10 umfasst in der gezeigten Ausführung eine Blende 14 bzw. zumindest einen Blendenbereich, der als Berührschirm 15 ausgebildet ist. Der Berührschirm 15 umfasst hierbei ein Display 16 und ein transparentes Sensorfeld 17, das zwischen Blende 14 und Display 16 angebracht ist und mit einer als Mikrocontroller uC ausgebildeten Steuereinrichtung 18 zur Erfassung der Berührposition in Wirkverbindung steht. Das Display 16 wird ebenfalls von einem oder von dem Mikrocontroller 18 angesteuert, um abhängig von der jeweils aktivierten Bedienungsmöglichkeit die entsprechenden Schaltflächen E, K, C. L auf dem Display 16 darzustellen. Die Steuereinrichtung 18 oder der Mikrocontroller uC ist vorteilhafterweise derart ausgelegt, dass sie auch die Lasten bzw. Aktoren, die der Heißgetränkebereiter 1 umfasst, steuert, um den gewünschten Zubereitungsprozess für das ausgewählte Getränk, beispielsweise Espresso, Kaffee, Cappuccino oder Latte Macciato, durchzuführen. Der Mikrocontroller uC steht dabei mit einem Speicher MEM in Verbindung, in dem bereits vordefinierte Rezepte bzw. Zubereitungsprogramme gespeichert sind. In den Speicher MEM können in einer bevorzugten Ausführung des Gerätes 1 zumindest einige vordefinierte Programme verändert und überschrieben werden oder zusätzliche, individuell vom Benutzer definierte Programme abgespeichert werden.

Gemäß Fig. 2 umfasst die Bedienvorrichtung in einer bevorzugten Ausführung einen Berührbildschirm 15 mit der Darstellung von Symbolen oder Texten auf oder in den dazugehörigen Schaltflächen E, K, C, L für Bedienhandlungen bzw. für die Auswahl eines angebotenen Getränks.

Hierbei sind auf dem Berührbildschirm 15 vier Betätigungsflächen E, K, C. L bzw. Schaltflächen dargestellt, die jeweils ein Getränk bzw. eine Getränkezubereitung, wie E Espresso, K Kaffee, C Cappuccino oder L Latte Macciato oder eine Kombination aus Parametern repräsentieren. In der in Fig. 2 skizzierten Anordnung sind alle vier Getränkezubereitungen auswählbar, wobei hierbei sichergestellt ist, dass alle Zutaten B, W, M (Fig. 1) in jeweils ausreichender Menge in den jeweiligen Vorratsbehältern 25, 71, 72 vorhanden sind. Die Mengen werden jeweils mittels einer Berechnungsformel oder eines mathematischen Modells von dem Mikrocontroller uC der Steuereinrichtung 18 berechnet oder ermittelt, sodass keine Füllstandsensoren notwendig sind.

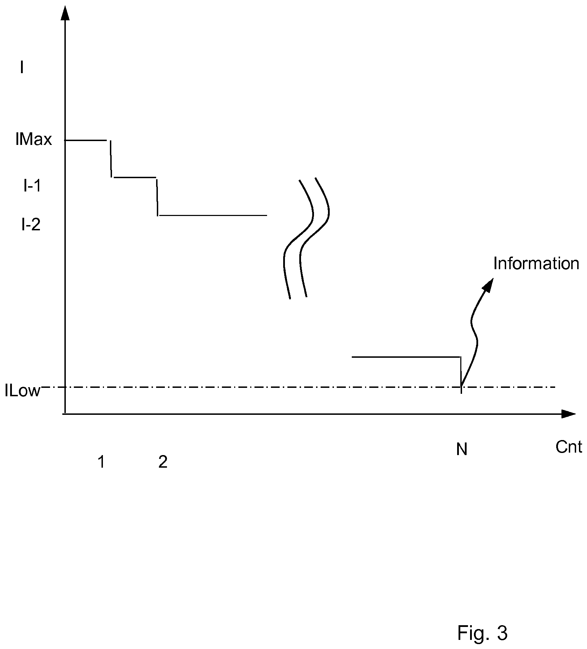

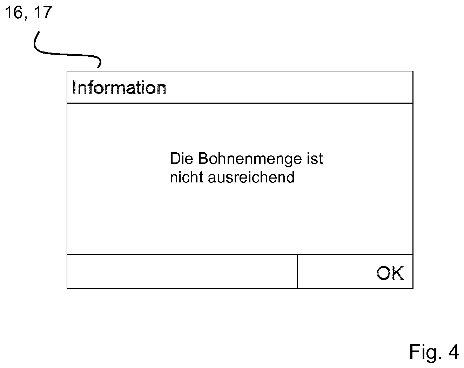

Das Diagramm in Fig. 3 zeigt beispielhaft das Verhalten der Füllstandsinformation für den Bohnenbehälter 71. Nachdem der Benutzer den Vorratsbehälter 71 vollständig mit Bohnen B aufgefüllt hat, wird der interne Index mit dem Wert IMax beschrieben. Die Erkennung, dass der Behälter 71 vollständig gefüllt ist, erfolgt mittels einer Benutzereingabe, also eine Betätigung eines Bedienelements zur Bestätigung, dass der zu befüllende Vorratsbehälter 71 befüllt wurde. Eine andere Möglichkeit ist, dass mit Hilfe eines Schalters zur Deckelerkennung für diese Quittierung verwendet wird. Sobald ein Kaffeegetränk zur Zubereitung aktiviert wird, vermindert sich der Index I um einen Zählerwert, hier um dem Wert 1. Dies geschieht so oft, bis zum N-ten Kaffeebezug der Index I den Minimalwert ILow erreicht oder unterschreitet. Die Anzahl der Bezüge ist mit Cnt bezeichnet. Nun ist der Berechnung nach der Behälter 71 für Kaffeebohnen B leer oder unterbefüllt, sodass eine Informationsmeldung, wie mit dem Pfeil "Information" angedeutet und wie sie beispielhaft in Fig. 4 dargestellt ist, ausgegeben wird, um den Benutzer zum Auffüllen des Behälters 71 aufzufordern.

## Patentansprüche

1. Programmgesteuerter Heißgetränkebereiter (1) mit Aktoren (8, 9, 70, V) zur Zubereitung von heißen Getränken, zumindest einem Vorratsbehälter (25, 71, 72) zur Bevorratung einer Zutat (B, W, M), einer Steuereinrichtung (18) zum Aktivieren und Deaktivieren der Aktoren (8, 9, 70, V) für die Zubereitung des Getränks und einer Bedienvorrichtung (10) mit einer Anzeigevorrichtung (15, 16) zur Anzeige oder Kennzeichnung von verschiedenen, auswählbaren Getränken oder Parametern, die mit der Steuereinrichtung (18) in Verbindung steht und einer Bedienhandhabe (E, K, C, L) zur Auswahl eines auszuwählenden Getränks, die ebenfalls mit der Steuereinrichtung (18) in Verbindung steht zur Aktivierung und Durchführung der Zubereitung des ausgewählten Getränks, wobei die die Steuereinrichtung (18) dazu eingerichtet und programmiert ist, eine Information über den Füllstand zumindest einer Zutat (9) in dem der Zutat (9) zugeordneten Vorratsbehälter (25, 71, 72) auf der Anzeigevorrichtung (15, 16) auszugeben,
**dadurch gekennzeichnet,**
**dass** die Steuereinrichtung (18, uC) ferner dazu eingerichtet und programmiert ist, eine im Vorratsbehälter (25, 71, 72) vorhandenen Zutatenmenge (I) anhand der vom Benutzer ausgewählten Getränke zu ermitteln;
wobei die Steuereinrichtung (18, uC) dazu eingerichtet und programmiert ist, die Information der Zutatenmenge (I) unter Zuhilfenahme einer Berechnungsformel oder eines mathematischen Modells nach jeweils einer Getränkeauswahlzu aktualisieren derart, dass ein im Speicher der Steuereinrichtung /18) abgespeichertes Maß oder ein Kennwert für die aktuell im Vorratsbehälter (25, 71, 72) angenommene Zutatenmenge bei der Auswahl oder beim Start der Getränkezubereitung um den Wert vermindert wird, der für die aktuelle Getränkezubereitung benötigt wird;
und **dass** die jeweiligen, verschiedenen Einzelmengen, die für die unterschiedlichen Getränkezubereitungen benötigt werden, der Steuerung (18) bekannt sind.

2. Heißgetränkebereiter nach Anspruch 1,
**dadurch gekennzeichnet,**
**dass** die Steuereinrichtung (18, uC) dazu eingerichtet und programmiert ist, bei Unterschreiten einer für ein spezifisches Getränk notwendigen Zutatenmenge (ILow) eine Warnmeldung, akustisch mittels eines Klangerzeugungsmittels und/oder optisch mittels der Anzeigevorrichtung (15, 16) auszugeben.

3. Heißgetränkebereiter nach Anspruch 1,
**dadurch gekennzeichnet,**
**dass** die Steuereinrichtung (18, uC) dazu eingerichtet und programmiert ist, die Information der Zutatenmenge (I) nur anhand der vom Benutzer jeweils getätigten Getränkeauswahl und ohne Zuhilfenahme von Füllstandsensoren zu berechnen und zu aktualisieren.

4. Heißgetränkebereiter nach Anspruch 1 oder 3,
**dadurch gekennzeichnet,**
**dass** die Steuereinrichtung (18, uC) dazu eingerichtet und programmiert ist, die Information der Zutatenmenge (I) wie folgt zu ermitteln:
ausgehend von einem Initialwert, der dem vollständig gefüllten Behälter (IMax) repräsentiert, die der Teilmengen, die jeweils den Verbrauch der Zutat für jeweils einen aktivierten Getränkebezug repräsentieren, zu subtrahieren.

5. Heißgetränkebereiter nach einem der Ansprüche 1 bis 4,
**dadurch gekennzeichnet,**
**dass** der Vorratsbehälter (71) für Kaffeebohnen als Zutat (B) vorgesehen ist, wobei die Steuereinrichtung (10, 15) dazu eingerichtet und programmiert ist, beim Unterschreiten der für ein Kaffeegetränk (E, K, C, L)) notwendigen Mindestmenge (ILow) bei der Auswahl von Getränken mit Kaffeeanteil (B) eine Warnmeldung zum Aufzeigen des Mangels an Kaffeebohnen (B) auf dem Display auszugeben.

6. Heißgetränkebereiter nach einem der Ansprüche 1 bis 4,
**dadurch gekennzeichnet**,
das der Vorratsbehälter (72) für Milch als Zutat (M) vorgesehen ist, wobei die Steuereinrichtung (18) dazu eingerichtet und programmiert ist, beim Unterschreiten der für ein Milchgetränk (L) notwendigen Mindestmenge (ILow) bei der Auswahl von Getränken mit Milchanteil (M) eine Warnmeldung zum Aufzeigen des Mangels an Milch (M) auf dem Display auszugeben.

7. Heißgetränkebereiter nach einem der Ansprüche 1 bis 4,
**dadurch gekennzeichnet,**
**dass** der Vorratsbehälter (25) für Wasser als Zutat (W) vorgesehen ist, wobei die Steuereinrichtung (18) dazu eingerichtet und programmiert ist, beim Unterschreiten der für ein Getränk mit Wasser (E, K, C, L) notwendigen Mindestmenge (ILow) bei der Auswahl von Getränken mit Wasseranteil (W) eine Warnmeldung zum Aufzeigen des Mangels an Wasser (W) auf dem Display auszugeben.

8. Verfahren zum Betreiben eines programmgesteuerten Heißgetränkebereiters (1) mit Aktoren (8, 9, 70, V) zur Zubereitung von heißen Getränken, zumindest einem Vorratsbehälter (25, 71, 72) zur Bevorratung einer Zutat (B, W, M), einer Steuereinrichtung (18) zum Aktivieren und deaktivieren der Aktoren (8, 9, 70, V) für die Zubereitung des Getränks und einer Bedienvorrichtung (10) mit einer Anzeigevorrichtung (16) zur Anzeige oder Kennzeichnung von verschiedenen, auswählbaren Getränken (E, K, C, L) oder Parametern, die mit der Steuereinrichtung (18) in Verbindung steht zur Auswahl und Beeinflussung des Ablaufs für die Zubereitung des ausgewählten Getränks (E, K, C, L), **gekennzeichnet durch** folgende Schritte:
- Ermitteln zumindest einer Zutatenmenge in zumindest einem Vorratsbehälter (25, 71, 72);
- Aktualisieren der Information (I) der Zutatenmenge (I) unter Zuhilfenahme einer Berechnungsformel oder eines mathematischen Modells nach jeweils einer Getränkeauswahl, derart, dass ein im Speicher der Steuereinrichtung /18) abgespeichertes Maß oder ein Kennwert für die aktuell im Vorratsbehälter (25, 71, 72) angenommene Zutatenmenge bei der Auswahl oder beim Start der Getränkezubereitung um den Wert vermindert wird, der für die aktuelle Getränkezubereitung benötigt wird;
und dass die jeweiligen, verschiedenen Einzelmengen, die für die unterschiedlichen Getränkezubereitungen benötigt werden der Steuereinrichtung (18) bekannt sind;
- Vergleichen der Zutatenmenge (I) mit einem Wert für eine Mindestmenge für ein mit dieser Zutat zu bereitendes Getränk;
- Ausgeben einer optischen Warnmeldung auf dem Display (15, 16) und/oder einer akustischen Ausgabe, wenn der erfasste Wert der Zutatenmenge (I) eine Mindestmenge unterschreitet.

9. Programmgesteuerter Heißgetränkebereiter nach einem der Ansprüche 1 bis 7,
wobei die Steuereinrichtung (18) und die Bedienvorrichtung (10, 15) dazu eingerichtet und programmiert sind, das Verfahren gemäß Anspruch 8 durchzuführen.

## Claims

1. Program-controlled hot beverage maker (1), comprising actuators (8, 9, 70, V) for preparing hot beverages, at least one storage container (25, 71, 72) for storing an ingredient (B, W, M), a control means (18) for activating and deactivating the actuators (8, 9, 70, V) for the preparation of the beverage, an operating device (10) which has a display device (15, 16) for displaying or identifying different selectable beverages or parameters and which is connected to the control means (18), and an operating handle (E, K, C, L) for selecting a beverage to be selected, which handle is also connected to the control means (18) for activating and carrying out the preparation of the selected beverage, the control means (18) being designed and programmed to output information on the fill level of at least one ingredient (9) in the storage container (25, 71, 72) assigned to the ingredient (9) on the display device (15, 16),
**characterised in that**
the control means (18, uC) is also designed and programmed to determine an ingredient quantity (I) present in the storage container (25, 71, 72) on the basis of the beverages selected by the user;
the control means (18, uC) being designed and programmed to update the information on the ingredient quantity (I) with the aid of a calculation formula or mathematical model after each beverage selection in such a way that when the beverage preparation is selected or started, a measure stored in the memory of the control means (18) or a characteristic value for the ingredient quantity currently received in the storage container (25, 71, 72) is reduced by the value required for the current beverage preparation;
and **in that** the different individual amounts required for the different beverage preparations are known to the controller (18).

2. Hot beverage maker according to claim 1,
**characterised in that**
the control means (18, uC) is designed and programmed to output a warning message acoustically by means of a sound generator and/or visually by means of the display device (15, 16) if an ingredient quantity (ILow) required for a specific beverage is not reached.

3. Hot beverage maker according to claim 1,
**characterised in that**
the control means (18, uC) is designed and programmed to calculate and update the information on the ingredient quantity (I) only on the basis of the beverage selection made by the user and without the aid of fill level sensors.

4. Hot beverage maker according to either claim 1 or claim 3,
**characterised in that**
the control means (18, uC) is designed and programmed to determine the information on the ingredient quantity (I) as follows:
starting from an initial value (IMax) which represents the completely filled container, subtracting the sub-quantities, each of which represents the consumption of the ingredient for each activated beverage purchase.

5. Hot beverage maker according to any of claims 1 to 4,
**characterised in that**
the storage container (71) is provided for coffee beans as an ingredient (B), the control means (10, 15) being designed and programmed to output a warning message indicating the lack of coffee beans (B) on the display when beverages containing a coffee proportion (B) are selected if the minimum quantity (ILow) required for a coffee beverage (E, K, C, L) is not met.

6. Hot beverage maker according to any of claims 1 to 4,
**characterised in that**
the storage container (72) is provided for milk as an ingredient (M), the control means (18) being designed and programmed to output a warning message indicating the lack of milk (M) on the display when beverages containing a milk proportion (M) are selected if the minimum quantity (ILow) required for a milk beverage (L) is not met.

7. Hot beverage maker according to any of claims 1 to 4,
**characterised in that**
the storage container (25) is provided for water as an ingredient (W), the control means (18) being designed and programmed to output a warning message indicating the lack of water (W) on the display when beverages containing a water proportion (W) are selected if the minimum quantity (ILow) required for a beverage (E, K, C, L) containing water is not met.

8. Method for operating a program-controlled hot beverage maker (1), comprising actuators (8, 9, 70, V) for preparing hot beverages, at least one storage container (25, 71, 72) for storing an ingredient (B, W, M), a control means (18) for activating and deactivating the actuators (8, 9, 70, V) for preparing the beverage, and an operating device (10) which has a display device (16) for displaying or identifying different selectable beverages (E, K, C, L) or parameters and which is connected to the control means (18) for selecting and influencing the sequence for the preparation of the selected beverage (E, K, C, L), **characterised by** the following steps:
- determining at least one ingredient quantity in at least one storage container (25, 71, 72);
- updating the information (I) on the ingredient quantity (I) with the aid of a calculation formula or mathematical model after each beverage selection in such a way that when the beverage preparation is selected or started, a measure stored in the memory of the control means (18) or a characteristic value for the ingredient quantity currently received in the storage container (25, 71, 72) is reduced by the value required for the current beverage preparation; and in that the different individual amounts required for the different beverage preparations are known to the control means (18);
- comparing the ingredient quantity (I) with a value for a minimum quantity for a beverage to be prepared using this ingredient;
- outputting a visual warning message on the display (15, 16) and/or an acoustic output if the recorded value of the ingredient quantity (I) does not reach a minimum quantity.

9. Program-controlled hot beverage maker according to any of claims 1 to 7, wherein the control means (18) and the operating device (10, 15) are designed and programmed to carry out the method according to claim 8.

## Revendications

1. Préparateur de boissons chaudes (1) commandé par programme comportant des actionneurs (8, 9, 70, V) destiné à la préparation des boissons chaudes, au moins un récipient de stockage (25, 71, 72) destiné au stockage d'un ingrédient (B, W, M), un moyen de commande (18) destiné à l'activation et à la désactivation des actionneurs (8, 9, 70, V) pour la préparation de la boisson et un dispositif de commande (10) comportant un dispositif d'affichage (15, 16) destiné à l'affichage ou à l'identification de différentes boissons ou différents paramètres sélectionnables, lequel dispositif de commande est connecté au moyen de commande (18), et une manette de commande (E, K, C, L) destinée à la sélection d'une boisson à sélectionner, laquelle est également connectée au moyen de commande (18) pour l'activation et la réalisation de la préparation de la boisson sélectionnée, dans lequel le moyen de commande (18) est conçu et programmé pour fournir des informations concernant le niveau de remplissage de l'au moins un ingrédient (9) dans le récipient de stockage (25, 71, 72) associé à l'ingrédient (9) sur le dispositif d'affichage (15, 16),
**caractérisé en ce**
**que** le dispositif de commande (18, uC) est en outre conçu et programmé pour déterminer une quantité d'ingrédients (I) présente dans le récipient de stockage (25, 71, 72) sur la base des boissons sélectionnées par l'utilisateur ;
dans lequel le dispositif de commande (18, uC) est conçu et programmé pour mettre à jour les informations concernant la quantité d'ingrédients (I) à l'aide d'une formule de calcul ou d'un modèle mathématique après chaque sélection de boisson de telle sorte qu'une mesure mémorisée dans la mémoire du moyen de commande (18) ou une valeur caractéristique pour la quantité d'ingrédients actuellement acceptée dans le récipient de stockage (25, 71, 72) est réduite de la valeur nécessaire pour la préparation de boisson actuelle lors de la sélection ou lors du démarrage de la préparation de boisson ;
et **que** les différentes quantités individuelles respectives nécessaires pour les différentes préparations de boissons sont connues de la régulation (18).

2. Préparateur de boissons chaudes selon la revendication 1,
**caractérisé en ce**
**que** le dispositif de commande (18, uC) est conçu et programmé, lorsque la quantité d'ingrédients (Ilow) nécessaire pour une boisson spécifique n'est pas atteinte, pour émettre acoustiquement au moyen d'un moyen de génération de sons et/ou optiquement au moyen du dispositif d'affichage (15, 16) un message d'avertissement.

3. Préparateur de boissons chaudes selon la revendication 1,
**caractérisé en ce**
**que** le dispositif de commande (18, uC) est conçu et programmé pour calculer et mettre à jour les informations concernant la quantité d'ingrédients (I) uniquement sur la base de la sélection de boisson respectivement effectuée par l'utilisateur et sans l'aide des capteurs de niveau de remplissage.

4. Préparateur de boissons chaudes selon la revendication 1 ou 3,
**caractérisé en ce**
**que** le dispositif de commande (18, uC) est conçu et programmé pour déterminer les informations concernant la quantité d'ingrédients (I) comme suit :
à partir d'une valeur initiale, laquelle représente le récipient complètement rempli (IMax), y soustraire les quantités partielles représentant respectivement la consommation de l'ingrédient pour chaque achat de boisson activé.

5. Préparateur de boissons chaudes selon l'une quelconque des revendications 1 à 4,
**caractérisé en ce**
**que** le récipient de stockage (71) est fourni pour des grains de café en tant qu'ingrédient (B), dans lequel le dispositif de commande (10, 15) est conçu et programmé, lorsque la quantité minimale (ILow) nécessaire pour une boisson à base de café (E, K, C, L) n'est pas atteinte, pour émettre, lors de la sélection de boissons contenant une certaine quantité de café (B), un message d'avertissement indiquant le manque de grains de café (B) sur l'écran d'affichage.

6. Préparateur de boissons chaudes selon l'une quelconque des revendications 1 à 4,
**caractérisé en ce**
**que** le récipient de stockage (72) est fourni pour du lait en tant qu'ingrédient (M), dans lequel le moyen de commande (18) est conçu et programmé, lorsque la quantité minimale (ILow) requise pour une boisson avec du lait (L) n'est pas atteinte, pour émettre, lors de la sélection de boissons contenant une certaine quantité de lait (M), un message d'avertissement indiquant le manque de lait (M) sur l'écran d'affichage.

7. Préparateur de boissons chaudes selon l'une quelconque des revendications 1 à 4,
**caractérisé en ce**
**que** le récipient de stockage (25) est fourni pour de l'eau en tant qu'ingrédient (W), dans lequel le moyen de commande (18) est conçu et programmé, lorsque la quantité minimale (ILow) requise pour une boisson avec de l'eau (E, K, C, L) n'est pas atteinte, pour émettre, lors de la sélection de boissons contenant une certaine quantité d'eau (W), un message d'avertissement indiquant le manque d'eau (W) sur l'écran d'affichage.

8. Procédé permettant de faire fonctionner un préparateur de boissons chaudes (1) commandé par programme comportant des actionneurs (8, 9, 70, V) destinés à la préparation des boissons chaudes, au moins un récipient de stockage (25, 71, 72) destiné au stockage d'un ingrédient (B, W, M), un moyen de commande (18) destiné à l'activation et à la désactivation des actionneurs (8, 9, 70, V) pour la préparation de la boisson et un dispositif de commande (10) comportant un dispositif d'affichage (16) pour l'affichage ou l'identification de différentes boissons (E, K, C, L) ou différents paramètres sélectionnables, lequel dispositif de commande est connecté au moyen de commande (18) pour sélectionner et influencer le processus de préparation de la boisson (E, K, C, L) sélectionnée, **caractérisé par** les étapes suivantes :
- la détermination d'au moins une quantité d'ingrédients dans au moins un récipient de stockage (25, 71, 72) ;
- la mise à jour des informations (I) concernant la quantité d'ingrédients (I) à l'aide d'une formule de calcul ou d'un modèle mathématique après chaque sélection de boisson de telle sorte qu'une mesure mémorisée dans la mémoire du moyen de commande (18) ou une valeur caractéristique pour la quantité d'ingrédients actuellement acceptée dans le récipient de stockage (25, 71, 72) est réduite de la valeur nécessaire pour la préparation de boisson actuelle lors de la sélection ou lors du démarrage de la préparation de boisson ;
et que les différentes quantités individuelles respectives nécessaires pour les différentes préparations de boissons sont connues du moyen de commande (18) ;
- la comparaison de la quantité d'ingrédients (I) avec une valeur pour une quantité minimale pour une boisson à préparer contenant ledit ingrédient ;
- L'émission d'un message d'avertissement optique sur l'écran d'affichage (15, 16) et/ou d'une sortie acoustique lorsque la valeur enregistrée de la quantité d'ingrédients (I) n'atteint pas une quantité minimale.

9. Préparateur de boissons chaudes commandé par programme selon l'une quelconque des revendications 1 à 7, dans lequel le moyen de commande (18) et le dispositif de commande (10, 15) sont conçus et programmés pour mettre en ouvre le procédé selon la revendication 8.
